# EUROPÄISCHE PATENTSCHRIFT

(11) **EP 0 346 813 B1**
(45) Veröffentlichungstag und Bekanntmachung des Hinweises auf die Patenterteilung: **13.09.1995**
(21) Anmeldenummer: 89110629.6
(22) Anmeldetag: 12.06.1989
(51) Int. Cl.: G06F 12/06

(54) **Speichersystem, bestehend aus mehreren nebeneinander angeordneten Speicherbaugruppen**
Memory system consisting of a plurality of memory modules arranged side by side
Système de mémoire constituée de plusieurs modules de mémoire disposés côte à côte

(30) Priorität: 14.06.1988 DE 3820235
(43) Veröffentlichungstag der Anmeldung: 20.12.1989
(73) Patentinhaber: Siemens Nixdorf Informationssysteme Aktiengesellschaft, 33102 Paderborn (DE)
(72) Erfinder: Brandt, Ulrich, Dipl.-Ing., D-8000 München 80 (DE); Sprick, Erhard, Dipl.-Ing., D-8000 München 60 (DE)
(74) Vertreter: Fuchs, Franz-Josef, Dr.-Ing.

(56) Entgegenhaltungen:
- US-A- 4 266 285
- ELEKTRONIK, Band 31, Nr. 10, Mai 1982, Seiten 99-104; G. SCHMITT: "UniversellesBussystem für verschiedene Mikroprozessortypen"
- ELECTRONIC DESIGN, Band 28, Nr. 25, Dezember 1980, Seiten 75-79; R. GREENE:"Pinout standard simplifies variable-density memory design"

## Beschreibung

### Speichersystem bestehend aus Speicherbaugruppen mit aus Speicherbausteinen zusammengesetzten Speichereinheiten

Die Erfindung betrifft ein Speichersystem gemäß dem Oberbegriff des Patentanspruches 1.

Ein Speichersystem in einer Datenverarbeitungsanlage ist in der Regel aus mehreren Speicherbaugruppen zusammengesetzt, die an Einbauplätzen beispielsweise in einem Rahmen, nebeneinander gesteckt sind. Jede Speicherbaugruppe besteht aus Speichereinheiten, die aus mehreren gleichartigen Speicherbausteinen zusammengesetzt sind. Neben den Speichereinheiten weist jede Speicherbaugruppe Leitungstreiber zur Kopplung der Speichereinheiten mit einem Leitungssystem zur Ubertragung von Dateneinheiten auf. Die Anzahl aller auf einer Speicherbaugruppe befindlichen und parallel angesteuerten Speicherbausteine legt die Datenbreite der Baugruppe fest.

Diese Datenbreite entspricht in der Regel der des mit einem Speicherzugriff anzusteuernden Speicherabschnittes und ist für alle Speicherbaugruppen gleich groß, so daß diese normalerweise parallel an das gemeinsame Leitungssystem entsprechender Datenbreite über individuelle Treiber angekoppelt sind.

Die fortschreitende technologische Entwicklung der Speicherbausteine führt fortlaufend zu solchen mit größerer Integrationsdichte und damit zu solchen mit immer größerer Speicherkapazität, wobei jedoch die Entwicklung der Speicherbausteine und die der Speichersysteme meistens nicht synchron verläuft, d.h. ein vorhandenes Speichersystem sollte auch mit Speicherbausteinen der nächsten oder übernächsten Entwicklungsgeneration bestückbar sein, um die Kosten für die Entwicklung der Speichersysteme zu senken.

Ein entsprechendes Lösungsbeispiel für ein Speichersystem, das mit einer von zwei verschiedenen Typen von Speicherbausteinen bestückbar ist, ist in der US-Patentschrift 4.266.285 beschrieben.

Hierbei bilden jeweils acht parallel ansteuerbare 1-Bitbreite Speicherbausteine eine Dateneinheit von 8 Bit Breite, und eine Speichereinheit besteht aus acht Reihen solcher Bausteingruppen, von denen beispielsweise alle Reihen mit 4 Kxl-Bit-Bausteinen oder aber nur zwei oder drei Reihen mit 16 Kxl-Bit-Bausteinen bestückt sein können. Die Bausteingruppen der einzelnen Reihen sind dabei adressenmäßig in linearer Kettung angeordnet und die Adressenleitungen sind durch eine entsprechende Auswahllogik abhängig von der Art der Bestückung in unterschiedlicher Weise wirksam schaltbar, um eine der Dateneinheiten konstanter Breite auszuwählen.

Andererseits kann die Bestückung mit einer Type von Speicherbausteinen von mehreren unterschiedlichen Typen dazu führen, daß z.B. wegen der unterschiedlichen Größe der Gehäuse bei den verschiedenen Typen von Speicherbausteinen die Speicherbaugruppen nur mit unterschiedlicher Dichte bepackt werden können und sich dadurch die verfügbare Datenbreite einer Speicherbaugruppe ändert.

Aufgabe der Erfindung ist es daher, ein Speichersystem so zu gestalten, daß unabhängig von der durch den Typ der für die Bestückung verwendeten Speicherbausteine bedingten unterschiedlichen verfügbaren Datenbreiten auf den Speicherbaugruppen ein Betrieb mit einheitlichem Leitungssystemaufbau und einheitlicher Treiber- und Speicherlogik möglich ist.

Diese Aufgabe wird durch die Merkmale des Patentanspruches 1 gelöst. Ausgangspunkt ist dabei eine Speicherlogik, bei der die Speichereinheiten aller Speicherbaugruppen gleichzeitig und in gleicher Weise adressierbar sind, so daß jeweils mehrere adressenmäßig aufeinanderfolgende Dateneinheiten vorgegebener Datenbreite gleichzeitig auswählbar sind. Dabei werden ausgehend von einer maximalen Datenbreite je Speicherbaugruppe mit jeweils 2ⁿ Leitungstreibern und entsprechend vielen Leitungssystemen für je eine Dateneinheit sowie 2^{x} auf einer Baugruppe unterbringbaren Speichereinheiten entsprechend der Bedingung 2ⁿ≧2^{x}≧2⁰ immer 2ⁿ Leitungstreiber auf 2^{(n-x)} Speicherbaugruppen wirksam geschaltet, so daß unabhängig von der Datenbreite der Speicherbaugruppen immer die Dateneinheiten von 2ⁿ aufeinanderfolgenden Speichereinheiten übertragbar sind. Entsprechend können alle 2ⁿ Dateneinheiten im einen Extremfall von einer einzigen Speicherbaugruppe mit 2ⁿ Speichereinheiten und im anderen Extremfall von 2ⁿ Speicherbaugruppen mit je einer Speichereinheit geliefert werden, so daß durch den jeweiligen Typ von Speicherbausteinen bedingte unterschiedliche Datenbreiten der Speicherbaugruppen trotz des einheitlichen Grundaufbaus des Speichersystems weitgehend ohne Auswirkung bleiben.

Eine Weiterbildung der Erfindung bezieht sich auf die erforderliche Zuordnung zwischen den Speichereinheiten und den Leitungstreibern für die einzelnen Leitungssysteme. Sie ist auf jeder Speicherbaugruppe durch eine entsprechend abänderbare Verdrahtung realisierbar.

Die Wirksamschaltung der jeweils für die Ubertragung von Daten über die Leitungssysteme benötigten Leitungstreiber wird dabei durch eine Freigabesteuerung erreicht, die von ausgewählten Adressenbits der jeweiligen Speicheradresse einstellbar ist. Die Einstellung der Freigabesteuerung für die Leitungstreiber hängt außerdem von der Art der verwendeten Speicherbausteine ab.

Einzelheiten der Erfindung werden nachfolgend anhand eines in der Zeichnung dargestellten Ausführungsbeispiels näher erläutert. Im einzelnen zeigen
- FIG 1: ein Speichersystem, bestehend aus vier gleichartigen Speicherbaugruppen mit jeweils zwei Speichereinheiten unter Verwendung von 1-MBit-Speicherbausteinen,
- FIG 2: das Speichersystem von FIG 1 bei einer gegenüber der Anzahl der Leitungstreiber verringerten Anzahl von Speichereinheiten je Speicherbaugruppe unter Verwendung von 4-MBit-Speicherbausteinen,
- FIG 3: die Zuordnung der Adressenbits der jeweiligen Speicheradresse zu den Teiladressen für die Adressierung des Speichersystems, der Speichereinheiten und der Freigabesteuerung abhängig von der Art der verwendeten Speicherbausteine und
- FIG 4: die Einstellung der Freigabesteuerung bei Verwendung von 1-MBit- oder 4-MBit-Speicherbausteinen.

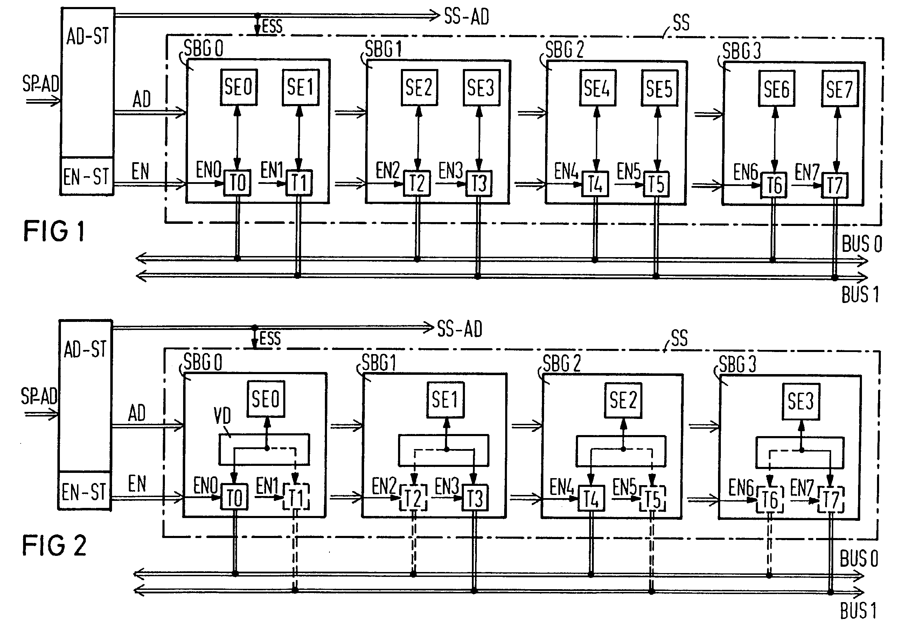

In FIG 1 ist ein Speichersystem SS dargestellt, das aus vier gleichartigen Speicherbaugruppen SBG0 bis SBG3 mit jeweils zwei Speichereinheiten SE0, SE1 bis SE6, SE7 besteht. Jede Speichereinheit SE0 bzw. SE1 der Speicherbaugruppe SBG0 ist über einen bidirektional arbeitenden Leitungstreiber T0 bzw. T1 mit jeweils einem von zwei parallel angeordneten Leitungssystemen BUS0 und BUS1 gekoppelt. Analog dazu sind in den anderen Speicherbaugruppen SBG1 bis SBG3 die Speichereinheiten SE2, SE3 bis SE6, SE7 über Leitungstreiber T2, T3 bis T6, T7 mit den Leitungssystemen BUS0 und BUS1 verbunden.

Die Speichereinheiten jeder Speicherbaugruppe sind dabei aus 1 MBit-Speicherbausteinen aufgebaut und gleichzeitig und in gleicher Weise über die Teiladresse AD adressierbar. Die Leitungstreiber T0 bis T7 werden durch die Signale EN0 bis EN7 jeweils paarweise zur gleichzeitigen Übertragung der Dateneinheiten, beispielsweise in Form von Doppelwörtern, über die Leitungssysteme BUS0 und BUS1 freigegeben. Anstelle eines Paares von Dateneinheiten können abhängig vom jeweiligen Speicherzugriffsbefehl auch mehrere Paare von Dateneinheiten, z.B. acht, durch aufeinanderfolgende Freigabe der Treiberpaare übertragen werden.

Die Freigabesignale EN0 bis EN7 sind aus der Teiladresse EN ableitbar. Neben den bereits erwähnten Teiladressen AD und EN weist die Anordnung eine weitere Teiladresse für die Adressierung des Speichersystems SS auf, die mit SS-AD bezeichnet ist. Sind mehrere Speichersysteme vorhanden, so kann jedes einzelne Speichersystem über ein Auswahlsignal ESS ausgewählt werden. Alle Teiladressen zusammen bilden die Speicheradresse SP-AD, deren Adressenbits für die Adressensteuerung AD-ST und für die Freigabesteuerung EN-ST verwendet werden.

Das Speichersystem SS aus FIG 1 weist in FIG 2 eine gegenüber der Anzahl der Leitungstreiber verringerte Anzahl von Speichereinheiten je Speicherbaugruppe auf. Ursache hierfür ist beispielsweise die Verwendung von 4-MBit-Speicherbausteinen, die aufgrund eines größeren Gehäuses der Bausteine nur noch eine geringere Packungsdichte zuläßt. In diesem Fall wird die Speichereinheit SE0 der Speicherbaugruppe SBG0 beispielsweise über den Leitungstreiber T0 mit dem zugehörigen Leitungssystem BUS0 und die Speichereinheit SE1 der Speichergruppe SBG1 über den Leitungstreiber T3 mit dem Leitungssystem BUS1 gekoppelt. Mit der gleichzeitigen Freigabe der beiden Leitungstreiber durch die Freigabesignale EN0 und EN3 werden gleichfalls zwei Dateneinheiten von zwei aufeinanderfolgenden Speichereinheiten übertragen. In gleicher Weise werden die Dateneinheiten aus den beiden aufeinanderfolgenden Speichereinheiten SE2 und SE3 der Speicherbaugruppen SBG2 und SBG3 über die beiden Leitungstreiber T4 und T7 gleichzeitig an die Leitungssysteme BUS0 und BUS1 angelegt.

Die jeweils erforderliche Zuordnung zwischen den Speichereinheiten und den Leitungstreibern für die einzelnen Leitungssysteme ist durch eine änderbare Verdrahtung VD auf jeder Speicherbaugruppe herstellbar. Sie muß so realisiert sein, daß jede Speichereinheit mit jedem Leitungstreiber verbindbar ist.

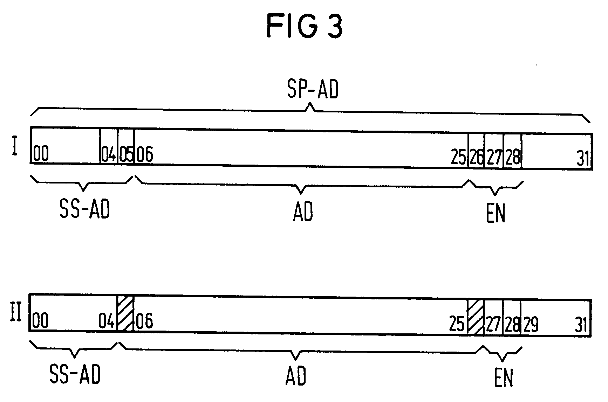

Wie bereits erwähnt, wird die Speicheradresse SP-AD in Teiladressen aufgeteilt. FIG 3 zeigt für die beiden Ausführungsbeispiele von FIG 1 und FIG 2 die Zuordnung der Adressenbits der jeweiligen Speicheradresse SP-AD zu den Teiladressen SS-AD, AD und EN. Für den Fall der Anwendung von 1-MBit-Speicherbausteinen entsprechend Zeile I in FIG 3 sind die Adressenbits 00 bis 05 für die Adressierung des Speichersystems, die Adressenbits 06 bis 25 für die Adressierung der Speichereinheiten sowie die Adressenbits 26 bis 28 für die Adressierung der Freigabesteuerung EN-ST vorgesehen. Bei der Zusammensetzung der Speichereinheiten aus 4-MBit-Speicherbausteinen werden für die Adressierung der Freigabesteuerung entsprechend Zeile II lediglich die Adressenbits 27 und 28 benötigt, wodurch die Bits 05 bis 26 die Speichereinheiten adressieren. Die übrigen Adressenbits 00 bis 04 ermöglichen die Auswahl des Speichersystems.

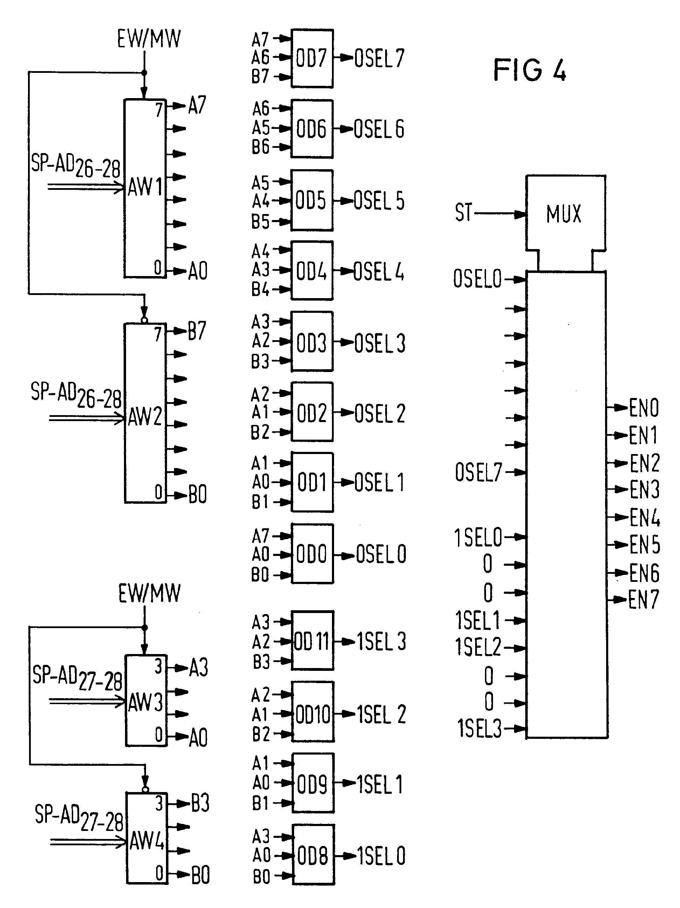

Die Einstellung der Freigabesteuerung EN-ST aus FIG 1 und FIG 2 und eine damit verbundene Wirksamschaltung von Leitungstreibern hängt von der Anwendung der 1-MBit- oder 4-MBit-Speicherbausteine ab. Bei Verwendung von 1 MBit-Speicherbausteinen analog FIG 1 werden die Speicheradressenbits 26 bis 28 durch den Auswerter AW1 oder AW2 (Fig. 4) decodiert, wobei das Steuersignal EW/MW festlegt, ob aus den Speichereinheiten die Dateneinheiten über die Leitungstreiber nacheinander oder mehrere Dateneinheiten, in unserem Ausführungsbeispiel jeweils zwei, parallel auf die zugehörigen Leitungssysteme durchgeschaltet werden. Im zuletzt genannten Fall bildet jedes der acht Ausgangssignale A0 bis A7 des Auswerters AW1 jeweils ein Eingangssignal zweier aufeinanderfolgender ODER-Gatter 0D0 bis 0D7. Beispielsweise bildet das Ausgangssignal A0 sowohl ein Eingangssignal für das Gatter 0D0 als auch für das Gatter 0D1, so daß immer zwei Ausgangssignale, in unserem Beispiel 0SEL0 und 0SEL1, gleichzeitig gesetzt sind. Im Fall der seriellen Übertragung ergeben sich die Auswahlsignale 0SEL0 bis 0SEL7 aus den durch den Auswerter AW2 decodierten Signalen B0 bis B7.

In gleicher Weise ergeben sich die Auswahlsignale 1 SEL0 bis 1SEL3 aus den ODER-Verknüpfungen 0D8 bis 0D11 als Folge der Zusammensetzung der Speichereinheiten aus 4-MBit-Speicherbausteinen. Deren Eingangssignale A0 bis A3 bzw. B0 bis B3 sind aus der Decodierung der Speicheradressenbits 27 bis 28 mit Hilfe der Auswerter AW3 bzw. AW4 ableitbar.

Die Multiplexeinrichtung MUX wählt abhängig von einem die Art der verwendeten Speicherbausteine kennzeichnenden Steuersignal ST eines der an seinen Eingängen anliegenden Bündel von Auswahlsignalen 0SEL0 bis 0SEL7 oder 1SEL0 bis 1SEL3 als Freigabesignale EN0 bis EN7 für die Leitungstreiber aus.

Das Speichersystem kann auch aus Speicherbaugruppen mit beispielsweise jeweils vier Speichereinheiten und vier Leitungstreibern je Speicherbaugruppe und aus den jeweils zugehörigen Leitungssystemen aufgebaut werden. Bei Verringerung der Anzahl der Speichereinheiten je Speicherbaugruppe, beispielsweise auf zwei oder eine Speichereinheit, bleibt die gleichzeitige Übertragung der Dateneinheiten über die unveränderte Anzahl von Leitungssystemen gewährleistet.

## Patentansprüche

1. Speichersystem, bestehend aus wenigstens einer Speicherbaugruppe (SBG...) mit aus mehreren gleichartigen Speicherbausteinen zusammengesetzten Speichereinheiten (SE...), wobei die Speichereinheiten aller Speicherbaugruppen gleichzeitig und in gleicher Weise adressierbar und dadurch mehrere aufeinanderfolgende Dateneinheiten vorgegebener Datenbreite gleichzeitig auswählbar sind,
**dadurch gekennzeichnet,** daß die Speicherbaugruppen (z.B. SBGD) jeweils 2ⁿ bidirektional arbeitende Leitungstreiber (z.B. T0 und T1) für jeweils eine Dateneinheit aufweisen, die die auf den Speicherbaugruppen angeordneten Speichereinheiten (z.B. SE0 und SE1 bzw. nur SE0) mit jeweils einem von ebenfalls 2ⁿ parallel angeordneten Leitungssystemen (BUS0 und BUS1) zur Ubertragung jeweils einer Dateneinheit koppeln, wobei jeweils eine der durch den Speicherzugriffsbefehl gekennzeichneten Anzahl von Dateneinheiten entsprechende Anzahl von Leitungstreibern zur gleichzeitigen Übertragung von Dateneinheiten über die Leitungssysteme freigegeben werden, daß zur Bildung der Speichereinheiten (SE0 bis SE7 bzw. SE0 bis SE3) verschiedene Arten von Speicherbausteinen verwendbar sind und abhängig von der Art der verwendeten Speicherbausteine die Anzahl 2^{x} der auf jeder Speicherbaugruppe (SBG0 bis SBG3) unterbringbaren Speichereinheiten im Bereich 2ⁿ ≧ 2^{x} ≧ 2⁰ liegt, daß bei einer gegenüber 2ⁿ verringerten Anzahl 2^{x} von Speichereinheiten (SE0 bis SE3) je Speicherbaugruppe jede der 2^{x} Speichereinheiten über 2^{(n-x)} Leitungstreiber mit dem jeweils zugehörigen Leitungssystem (BUS0 oder BUS1) in der Weise koppelbar ist, daß durch Freigabe von insgesamt 2ⁿ Leitungstreibern auf jeweils 2^{(n-x)} Speicherbaugruppen (SBG0 und SBG1 oder SBG2 und SBG3) über die 2ⁿ Leitungssysteme die Dateneinheiten von 2ⁿ aufeinanderfolgenden Speichereinheiten (SE0 und SE1 oder SE2 und SE3) übertragbar sind.

2. Speichersystem nach Anspruch 1,
**dadurch gekennzeichnet,** daß auf jeder Speicherbaugruppe (SBO bis SBG3) die jeweils erforderliche Zuordnung zwischen den Speichereinheiten (SE0 bis SE3) und den Leitungstreibern (T0 bis T7) für die einzelnen Leitungssysteme (BUS0 und BUS1) durch eine entsprechend abänderbare Verdrahtung (VD) herstellbar ist.

3. Speichersystem nach Anspruch 1 oder 2,
**dadurch gekennzeichnet,** daß die jeweils für die Übertragung von Daten über die Leitungssysteme (BUS0 und BUS1) benötigten Leitungstreiber (T0 bis T7) durch eine von ausgewählten Adressenbits (EN) der jeweiligen Speicheradresse (SP-AD) einstellbare Freigabesteuerung (EN-ST) wirksam schaltbar sind.

4. Speichersystem nach Anspruch 3,
**dadurch gekennzeichnet,** daß die Freigabesteuerung (EN-ST) für die Leitungstreiber (T0 bis T7) abhängig von der Art der verwendeten Speicherbausteine einstellbar ist.

5. Speichersystem nach einem der Ansprüche 1 bis 4,
**dadurch gekennzeichnet,** daß entsprechend n=1 zwei Leitungssysteme (BUS0 und BUS1) und jeweils zwei Leitungstreiber (z.B. T0 und T1) je Speicherbaugruppe (z.B. SBG0) vorgesehen sind.

## Claims

1. Memory system, comprising at least one memory module (SEG...) with memory units (SE...) composed of a plurality of identical memory chips, in which system the memory units of all the memory modules are addressable simultaneously and in the same way and, as a result, a plurality of successive data units of a predetermined data width are simultaneously selectable, characterized in that the memory modules (for example SBG0) have in each case 2ⁿ bidirectionally operating line drivers (for example T0 and T1) for in each case one data unit, which drivers couple the memory units (for example SE0 and SE1 or only SE0) arranged on the memory modules to in each case one of likewise 2ⁿ line systems (BUS0 and BUS1), arranged in parallel, for the transfer of in each case one data unit, a number of line drivers corresponding to the number of data units, which is identified by the memory access command, being enabled for the simultaneous transfer of data units via the line systems, in that, for forming the memory units (SE0 to SE7 or SE0 to SE3), various types of memory chips can be used and, depending on the type of memory chips used, the number 2^{x} of memory units which can be accommodated on each memory module (SBG0 to SBG3) lies in the range 2ⁿ ≧ 2^{x} ≧ 2⁰, in that, given a number 2^{x} of memory units (SE0 to SE3) reduced in relation to 2ⁿ per memory module, each of the 2^{x} memory units can be coupled via 2^{(n-x)} line drivers to the respectively associated line system (BUS0 or BUS1) in such a way that, by enabling a total of 2ⁿ line drivers on in each case memory modules (SBG0 and SBG1 or SBG2 and SBG3), the data units of 2ⁿ successive memory units (SE0 and SE1 or SE2 and SE3) can be transferred via the 2ⁿ line systems.

2. Memory system according to Claim 1, characterized in that, on each memory module (SBG0 to SBG3), the respectively required assignment between the memory units (SE0 to SE3) and the line drivers (T0 to T7) for the individual line systems (BUS0 and BUS1) can be established by a correspondingly alterable wiring (VD).

3. Memory system according to Claim 1 or 2, characterized in that the line drivers (T0 to T7) respectively required for the transfer of data via the line systems (BUS0 and BUS1) are able to be activated by an enabling controller (EN-ST) which can be set by selected address bits (EN) of the respective memory address (SP-AD).

4. Memory system according to Claim 3, characterized in that the enabling controller (EN-ST) for the line drivers (T0 to T7) can be set according to the type of memory chips used.

5. Memory system according to one of Claims 1 to 4, characterized in that, corresponding to n=1, two line systems (BUS0 and BUS1) and in each case two line drivers (for example T0 and T1) are provided for each memory module (for example SBG0).

## Revendications

1. Système de mémoire constitué par au moins un module de mémoire (SBG...) comportant des unités de mémoire (SE...), formées par la réunion de plusieurs modules de mémoire identiques, et dans lequel les unités de mémoire de tous les modules de mémoire peuvent être adressées simultanément et de la même manière et que, de ce fait, plusieurs unités de données successives ayant une largeur de données prédéterminée peuvent être sélectionnées simultanément,
caractérisé par le fait que les modules de mémoire (par exemple SBGO) comportent respectivement 2ⁿ étages d'attaque de lignes (par exemple T0 et T1), qui travaillent de façon bidirectionnelle, pour respectivement une unité de données, que les unités de mémoire (par exemple SE0 et SE1 ou seulement SE0), présentes dans les modules de mémoire, relient respectivement l'un de également 2ⁿ systèmes de lignes (BUS0 et BUS1) disposés en parallèle, pour la transmission respectivement d'une unité de données, auquel cas respectivement un nombre d'étages d'attaque de lignes, qui correspond au nombre d'unités de données, caractérisé par la commande d'accès en mémoire, sont libérés simultanément pour la transmission simultanée d'une unité de données par l'intermédiaire du système de lignes, que pour la formation des unités de mémoire (SE0 à SE7 ou SE0 à SE3) , on peut utiliser différents types de modules de mémoire et qu'en fonction du type des modules de mémoire utilisés, le nombre 2^{x} des unités de mémoire, qui peuvent être disposées dans chaque module de mémoire (SBG0 à SBG3), est situé dans la gamme 2ⁿ ≧ 2^{x} ≧ 2⁰, que dans le cas d'un nombre 2^{x}, réduit par rapport à 2ⁿ, d'une unité de mémoire (SE0 à SE3), pour chaque module, chacune des 2^{x} unités de mémoire peut être accouplée, par l'intermédiaire de 2^{(n-x)} étages d'attaque de ligne, au système respectivement associé de lignes (BUS0 ou BUS1) de telle sorte que sous l'effet de la libération d'un ensemble de 2ⁿ étages d'attaque de lignes dans respectivement 2^{(n-x)} modules de mémoire (SBG0 et SBG1 ou SBG2 et SBG3), les unités de données de 2ⁿ unités de mémoire successives (SE0 et SE1 ou SE0 et SE3) peuvent être transmises par l'intermédiaire des 2ⁿ systèmes de lignes.

2. Système de mémoire suivant la revendication 1, caractérisé par le fait que dans chaque module de mémoire (SBG0 à SBG3), l'association respectivement nécessaire entre les unités de mémoire (SE0 à SE3) et les étages d'attaque de lignes (T0 à T7) pour les différents systèmes de lignes (BUS0 et BUS1) peut être établie au moyen d'un câblage (VD) pouvant être modifié de façon correspondante.

3. Système de mémoire suivant la revendication 1 ou 2, caractérisé par le fait que les étages d'attaque de lignes (T0 à T7), qui sont nécessaires pour la transmission de données par l'intermédiaire des systèmes de lignes (BUS0 et BUS1), peuvent être activés par une unité de commande de libération (EN-ST), qui est réglable par des bits sélectionnés (EN) de l'adresse respective de mémoire (SP-AD).

4. Système de mémoire suivant la revendication 3, caractérisé par le fait que l'unité de commande de libération (EN-ST) pour les étages d'attaque de lignes (T0 à T7) est réglable en fonction du type des modules de mémoire utilisés.

5. Système de mémoire suivant l'une des revendications 1 à 4, caractérisé par le fait qu'en fonction de n=1, deux systèmes de lignes (BUS0 et BUS1) et respectivement deux étages d'attaque de lignes (par exemple T0 et T1) sont prévus pour chaque module de mémoire (par exemple SBG0).
